# EUROPEAN PATENT SPECIFICATION

(11) **EP 0 572 703 B1**
(45) Date of publication and mention of the grant of the patent: **08.11.1995**
(21) Application number: 92109519.6
(22) Date of filing: 05.06.1992
(51) Int. Cl.: G02C 5/22

(54) **Spectacle mount hinging elastic yielding device for earpieces with said spectacle mount hinging device**
Biegsame elastische Scharniervorrichtung für Brillenbügel
Dispositif d'articulation élastique flexible pour les branches de lunettes

(43) Date of publication of application: 08.12.1993
(73) Proprietor: 2 M S.r.l., I-31040 Segusino (TV) (IT)
(72) Inventor: Minute, Pietro, I-31040 Segusino (TV) (IT)
(74) Representative: D'Agostini, Giovanni, Dr.

(56) References cited:
- EP-A- 0 207 190
- WO-A-91/14960
- FR-A- 2 574 569
- FR-A- 2 662 516

## Description

This invention has for object an improved device for the elastic yielding of ear pieces for spectacles.
This invention regards substantially a spectacle mount and also spectacles.

In prior art are known different kinds of devices for the elastic yielding of ear pieces for spectacles. More in particular, a first type of flexible ear piece for spectacles provided a blade joint blocking system with a block and a cross screw, but which required a somewhat complex realization, particularly in the relative assembly and viceversa making difficult any type of intervention, in conclusion not being demountable.

A second well known solution, consists of a hinging element to be inserted in a guide sleeve equipped with clamping screws, blockage and regulation means, in which an interior spring is compressible; everything to be inserted internally in a container or jacket associated to the ear pieces themselves. In this case, the device even though demountable, is always extremely complex and equally difficult to realize, involving high production costs (Eg. WO-A-9114960; EP-A-0207190; FR-A-2662516).

Finally the third solution was proposed by the same applicant, as disclosed in the Italian Utility Model Application No. 59307B/88 filed on Jan. 21, 1988, having for object an "Improved device for the elastic yielding of the ear pieces for spectacles". In practice, said device includes a hinging element composed of an essentially cylindric body internally partially hollow, ending with flat ends hingeable to a frame for spectacles, said element being able to be inserted inside of a container or jacket associated to an ear piece, and in which inside said cylindric body, a spring is inserted, which is compressible as its ends are in abutment on one side with a dowel or an equivalent screwable means on one end of the said cylindric body and on the other side with a traversal screw passing orthogonally through said container and the cylindric body.

However, even in the last proposal some drawbacks were discovered. In this and other solutions, to hinge the ear piece to the frame of the spectacles by a screw, a sleeve is inserted by pressure (being slightly less in diameter and in height), inside the keying hole in the male hinge embedded in the frame of the spectacles or constituent part of the ear piece. Assembling the ear piece to the frame by screwing, the ends of the female hinging element are compressed onto the surface of the male hinge of the frame or ear piece, preventing a correct functioning of the same. In fact, some friction is created between the two surfaces which will be greater the more the hinging screws are screwed. Furthermore, this fact as time goes by, causes the loosening of the screw, requiring frequent interventions for adjustment. For this reason is known a sleeve only of plastic material, slightly protruding with respect to the hole and with a turned-up edge, but however it has various disadvantages. In particular, by always tightening the ends of the female hinge, we cause an annular dilatation of the sleeve that in this way further compresses the part subjected to friction, mainly on the internal part of the hole in which it is inserted, blocking a correct rotation. Another drawback is noticeable by the use of a spring-holding screw in screwed abutment on the end of the cylindric connecting element. In this case, besides the cost factor, a particular type of workmanship is needed, requiring more time for assembly. A third but not last noticeable drawback is that it utilizes a screw as a holding means in abutment at one end of the spring. In this last case the assembly becomes even less practical and slower due to the difficulty of positioning the screw and for the consequent insertion.

Scope of the present invention is to obviate the above-mentioned drawbacks. This and other scopes are attained according to the invention by a device for the elastic yielding of ear pieces for spectacles according to claims 1-3. In such a way, by the important creative contribution the effect of which realizes an immediate technical progress, we achieve different advantages amongst which the rapid assembly of the single components and therefore a greater productive capacity and consequently generally contained costs, even as a function of the components so used. Lastly, an effective hinging of the respective frame is possible, reducing substantially the friction provoked by repeated rotation and preventing the blockage or viceversa the loosening, of the hinging screw thus eliminating the need for successive adjustments.

These and other advantages will appear from the description of the preferred solutions with the help of the enclosed schematic drawings, the details of which are not to be considered limitative but only illustrative.

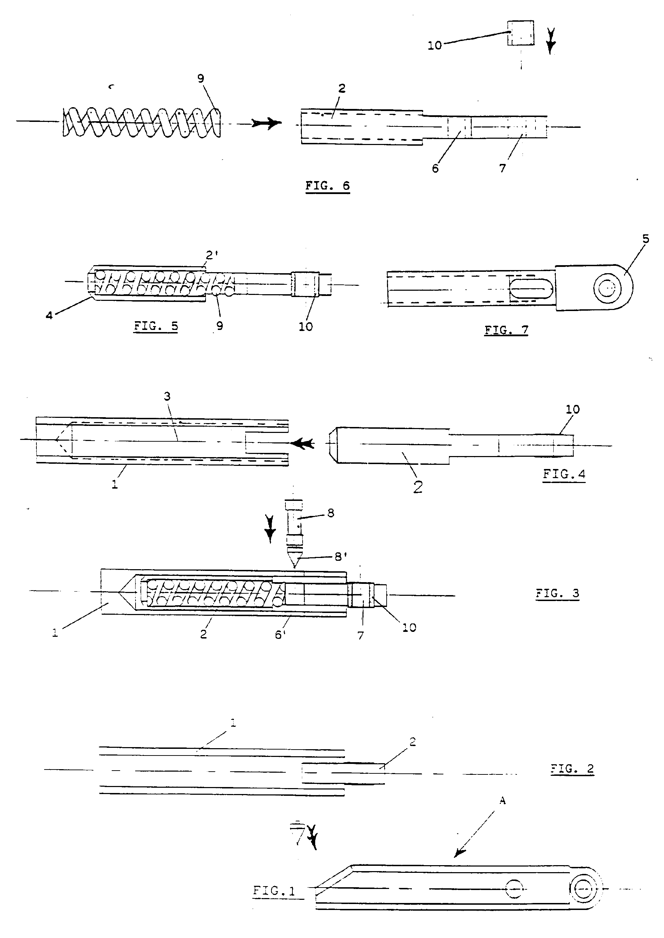

Figure 1 represents a plane-view of an elastic yielding device.

Figure 2 represents a side-view of the same device.

Figure 3 represents a view of the longitudinal section of the device of the previous figure.

Figure 4 represents an enlarged side-view of the complete connecting element to be inserted into the containing jacket.

Figure 5 represents a view of a section of the assembled connecting element of the previous figure.

Figure 6 represents an enlarged view of the components of the connecting element.

Figure 7 represents a plane view of he connecting element only.

Making reference also to the figures it is disclosed that a device for elastic yielding of the type (A), is composed of a jacket or box (1) associable to an ear piece for spectacle frames, inside which jacket or box, in the blind correspondent hole (3), is inserted a connecting element (2). The connecting element (2) is composed on one side of a substantially cylindric body (2′) ending with a conical spring abutment (4), while on the other there is a male hinge (5) with a hinge hole (7) and having in the neck an elongated guide hole (6). The guide hole (6), has the task to limit the reciprocal movement of the connecting element (2) into the jacket (1), more in particular, said keying hole (6) is a slot in order to consent a certain longitudinal play or clearance of the connecting element (2) realizing a guide for the same. The position of the guide hole (6) corresponds to a holding keying hole (6′) obtained on at least one side of the jacket (1) to allow the insertion of a pin means (8). The pin means (8) is composed of a holding pin and a detachable conical point (8′). Said conical point (8′) is connected by a neck to said pin and after insertion in the keying hole and guide hole (6′,6), its conical point (8′), being protruding, is removable. The remaining portion (8), remaining internally inserted in the device (A), acts as an abutment means at the end of the spring (9) inserted coaxially to said cylindric body (2′). In this case said spring is shaped in order to have centrally, a diameter which is smaller with respect to the two ends. Lastly, inside of the external hinge hole (7), which forms the male hinge of the device (A), is inserted a metallic hinge sleeve (10), said metallic sleeve being made of bronze or brass. Said sleeve has a diameter more or less equal to that of the hole (7) but its height is slightly greater with respect to that of said hole (7). In conclusion the hinge sleeve (10), is inserted in the hole (7) in order to protrude slightly on both sides of the correspondent female hinge inserted in the frame of the spectacles.
Said guide pin (8) inserted in said guide hole (6) gives the possibility to said connecting element (2) to slide inside said jacket (1) with a reciprocal movement determined by said guide hole (6) against the force of said compressed spring (9).

## Claims

1. A spectacle mount hinging elastic yielding device for ear pieces, of the type composed of a partially hollow connecting element (2), with an end having a hinge hole (7) hingeable to a frame or mount for spectacles, said connecting element (2) being inserted in a jacket (1) associated to an earpiece end; inside the said connecting element (2) a compressible spring (9) is housed, one end of said spring being in abutment with an end of said jacket, characterized in that :
- said jacket (1) has a transverse holding keying hole (6′);
- said connecting element (2) has two holes:
· one being said hinge hole (7) and
· the other one being a guide hole (6) placed in an inner position and shaped as a slot and substantially corresponding to said transverse holding hole (6′) in said jacket (1);
- said compressible spring (9) is compressed by:
· an essentially conical or tapered edge (4) at one end of said connecting element (2) opposite to said hinge hole (7);
· a guide pin (8) inserted in said jacket keying holding hole (6′) and connecting element guide hole (6), giving the possibility to said connecting element (2) to slide inside said jacket (1), with a reciprocal movement determined by said guide hole (6) against the force of said compressed spring (9).

2. A spectacle mount hinging elastic yielding device for ear pieces as claimed in claim 1, characterized in that:
- said guide pin (8) has at one end a conical point (8′) connected to said pin by a neck;
- after insertion in said guide hole (6) and said keying holding hole (6′), said conical point (8′) can be detached.

3. A spectacle mount hinging elastic yielding device for ear pieces as claimed in claim 1, characterized in that said hinge hole (7) comprises a cylindric hinge sleeve (10) that slightly protrudes on both sides of said connecting element (2).

## Patentansprüche

1. Biegsame elastische Scharniervorrichtung für Brillenbügel, bestehend aus einem teilweise hohlen Verbindungselement (2) mit einem Gelenkloch (7) an einem Ende, das an einem Brillengestell oder -rahmen aufhängbar ist, wobei das Verbindungselement sich in einer Hülse (1) befindet, die mit einem Brillenbügelende verbunden ist, und im Innern des Verbindungselements (2) eine zusammendrückbare Feder (9) untergebracht ist, wobei sich ein Ende der Feder in Anschlag mit einem Ende der Hülse befindet, gekennzeichnet dadurch, daß:
- die genannte Hülse ein verstiftetes Halte-Querloch (6′) aufweist;
- das genannte Verbindungselement (2) zwei Löcher besitzt:
· eines ist das besagte Gelenkloch (7) und
· das andere ein Führungsloch (6), das sich innen befindet und als Schlitz ausgebildet ist und im wesentlichen dem genannten Halte-Querloch (6′) in der genannten Hülse (1) entspricht;
- die zusammendrückbare Feder (9) wird zusammengedrückt durch:
· eine im wesentlichen kegelige oder spitz zulaufende Kante (4) an einem Ende des besagten Verbindungselements (2) gegenüber dem Gelenkloch (7);
· einen Führungszapfen (8), der in das genannte verstiftete Halte-Hülsenloch (6′) und das Führungsloch (6) des Verbindungselements eingeführt ist, so daß das Verbindungselement (2) in die genannte Hülse (1) gleiten kann, wobei das Führungsloch (6) eine Gegenbewegung gegen die Kraft der zusammendrückbaren Feder (9) bestimmt.

2. Biegsame elastische Scharniervorrichtung für Brillenbügel wie nach Anspruch 1, gekennzeichnet dadurch, daß:
- der genannte Führungszapfen (8) an einem Ende einen konischen Punkt (8′) aufweist, der durch einen Kragen mit besagtem Zapfen verbunden ist;
- nach der Einführung in das Führungsloch (6) und das verstiftete Halteloch (6′) der konische Punkt (8′) abgenommen werden kann .

3. Biegsame elastische Scharniervorrichtung für Brillenbügel wie nach Anspruch 1, gekennzeichnet dadurch, daß das Gelenkloch (7) eine zylindrische Gelenkbüchse (10) umfaßt, die etwas über beide Seiten des Verbindungselements (2) ragt.

## Revendications

1. Un dispositif d'articulation élastique flexible pour les branches de lunettes, du type constitué par un élément de connexion partiellement creux (2), avec une extrémité ayant un trou à pivot (7) qui peut être pivoté à une monture ou support pour lunettes, dit élément de connexion étant inséré dans une enveloppe (1) associé à une extrémité de branche; dans le dit élément de connexion (2) est logé un ressort comprimable (9), une extrémité du dit ressort étant en articulation avec une extrémité de ladite enveloppe, caractérisé en ce que:
- ladite enveloppe a un trou de tenue de clavetage transversal (6′);
- dit élément de connexion (2) a deux trous:
· un étant ledit trou à pivot (7) et
· l'autre étant un trou de guidage placé dans une position interne et façonnée comme une fente (6) et correspondant substantiellement à dit trou de tenue transversal (6′) dans ladite enveloppe (1);
- dit ressort comprimable (9) est comprimé par:
· un bord essentiellement conique ou effilé (4) à une extrémité dudit élément de connexion (2) opposé au dit trou à pivot (7);
· une cheville de guidage (8) insérée dans ledit trou de tenue de clavetage de l'enveloppe (6′) et trou de guidage de l'élément de connexion (6), donnant la possibilité au dit élément de connexion (2) de glisser dans ladite enveloppe (1), avec un mouvement réciproque déterminé par ledit trou de guidage (6) contre la force dudit ressort comprimée (9).

2. Un dispositif d'articulation élastique flexible pour les branches de lunettes selon la revendication 1, caractérisé en ce que:
- ladite cheville de guidage (8) a à une de ses extrémités un point conique (8′) connecté à la ladite cheville par un collet;
- après l'insertion dans ledit trou de guidage (6) et dit trou de tenue de clavetage (6′), dit point conique (8′) peut être détaché.

3. Un dispositif d'articulation élastique flexible pour les branches de lunettes selon la revendication 1, caractérisé en ce que ledit trou à pivot (7) a une douille à pivot cylindrique (10) qui fait légèrement saillie sur les bords dudit élément de connexion (2).
